# EUROPÄISCHE PATENTSCHRIFT

(11) **EP 0 890 021 B1**
(45) Veröffentlichungstag und Bekanntmachung des Hinweises auf die Patenterteilung: **01.09.1999**
(21) Anmeldenummer: 97915333.5
(22) Anmeldetag: 04.03.1997
(51) Int. Cl.: F02D 41/22, F02D 41/38

(54) **VERFAHREN ZUM ERKENNEN VON IRREGULÄREN VERBRENNUNGSVORGÄNGEN IN EINER MEHRZYLINDRIGEN DIESEL-BRENNKRAFTMASCHINE**
PROCESS FOR RECOGNIZING IRREGULARITIES IN COMBUSTION PROCESSES IN A MULTIPLE CYLINDER DIESEL INTERNAL COMBUSTION ENGINE
PROCEDE POUR RECONNAITRE DES PROCESSUS DE COMBUSTION IRREGULIERS DANS UN MOTEUR DIESEL A PLUSIEURS CYLINDRIQUES

(30) Priorität: 27.03.1996 DE 19612180
(43) Veröffentlichungstag der Anmeldung: 13.01.1999
(73) Patentinhaber: SIEMENS AKTIENGESELLSCHAFT, 80333 München (DE)
(72) Erfinder: WENZLAWSKI, Klaus, D-90429 Nürnberg (DE); FRIEDRICH, Arno, D-93047 Regensburg (DE)
(86) Internationale Anmeldenummer: DE9700405
(87) Internationale Veröffentlichungsnummer: WO9736097

(56) Entgegenhaltungen:
- EP-A- 0 326 898
- EP-A- 0 494 423
- US-A- 4 487 184
- US-A- 5 040 510

## Beschreibung

Die Erfindung betrifft ein Verfahren zum Erkennen von irregulären Verbrennungsvorgängen in einer mehrzylindrigen Diesel-Brennkraftmaschine durch Auswerten des Verbrennungsgeräusches mittels eines Körperschallsensors.

Einspritzsysteme bei Diesel-Brennkraftmaschinen haben die Aufgabe, den Kraftstoff in sehr kurzer Zeit möglichst fein zerstäubt in den Brennraum einzubringen. Je höher der Einspritzdruck ist, um so besser ist die Gemischbildung und damit um so geringer der Kraftstoffverbrauch und die Rauchemission. Einspritzsysteme aktuellen Entwicklungsstandes, sogenannte Common-Rail-Systeme, arbeiten mit Einspritzdrücken bis zu 1500 bar und bestehen im wesentlichen aus einer Hochdruckpumpe, dem Druckspeicher, den Injektoren und der elektronischen Steuereinrichtung mit den notwendigen Sensoren.

Ein Problem bei solchen zylinderindividuell angesteuerten Einspritzsystemen besteht darin, daß durch Falschansteuerung zB. zu falschen Zeitpunkten oder durch Nichtansteuerung durch fehlende Bestromung einzelner oder mehrerer Injektoren das Betriebsverhalten der Brennkraftmaschine, insbesondere das Abgasverhalten negativ beeinflußt wird.

Der Erfindung liegt die Aufgabe zugrunde, ein Verfahren anzugeben, mit dessen Hilfe auf einfache und kostengünstige Weise irreguläre Verbrennungen aufgrund von Fehleinspritzungen oder fehlende Verbrennungen in einer mehrzylindrigen Diesel-Brennkraftmaschine detektiert werden können.

Diese Aufgabe wird erfindungsgemäß durch die Merkmale des Patentanspruches 1 gelöst. Vorteilhafte Ausgestaltungen der Erfindung sind in den Unteransprüchen gekennzeichnet.

Es sind verschiedene zylinderspezifische Auswertungen von Körperschallsignalen bekannt, z.B. zur Klopferkennung (EP-A- 494 423); um Verbrennungsausetzer zu erkennen oder um die Ventilsteuerzeiten zu regeln. Dabei kommen üblicherweise Messfenster und Schwellwerte zum Einsatz.

Durch Auswerten des Verbrennungsgeräusches in den Brennräumen der einzelnen Zylinder mit Hilfe einer Körperschallanalyse ist sowohl eine Detektion von unzureichenden Verbrennungsvorgängen z.B. aufgrund von Falschansteuerungen der Injektoren, als auch der vollständige Ausfall eines oder mehrerer Injektoren möglich. Insbesondere können dann bei erkannten Fehleinspritzungen Motorschutzmaßnahmen ergriffen werden.

Ein Ausführungsbeispiel der Erfindung ist im folgenden unter Bezugnahme auf die Zeichnung näher erläutert. Es zeigen:
- Figur 1: die qualitativen Verläufe des Druckes und des Verbrennungsgeräusches innerhalb eines Zylinders in Abhängigkeit vom Kurbelwinkel,
- Figur 2: ein Flußdiagramm für den Verfahrensablauf zum Bestimmen von irregulären Verbrennngsvorgängen und
- Figur 3: ein Meßdiagramm für die Zylinderdrücke und die entsprechenden Signale des Klopfsensors bei einer 4-Zylinder- Brennkraftmaschine

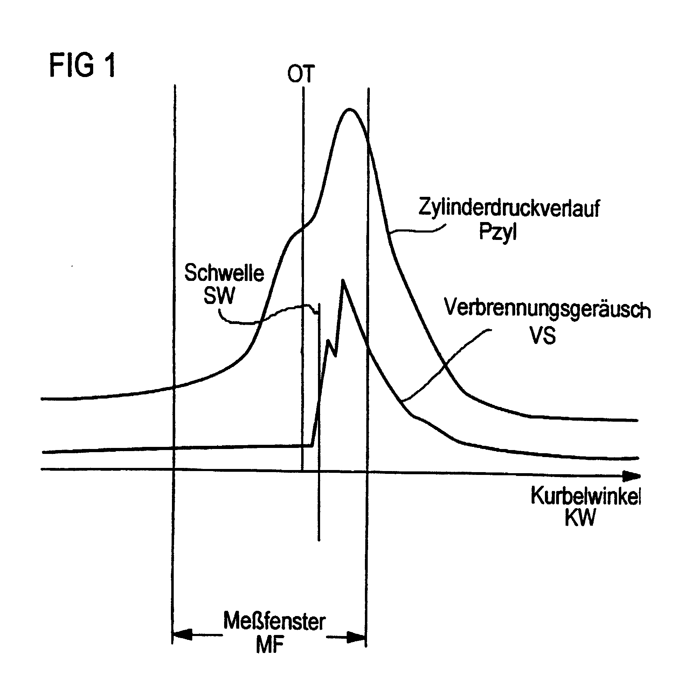

Die qualitative Darstellung nach Figur 1 zeigt den typischen Verlauf des Druckes P_{Zyl} in einem Zylinder einer Diesel-Brennkraftmaschine abhängig vom Kurbelwinkel. Der obere Tot-punkt ist dabei mit OT bezeichnet. Als weitere Kurve ist der zugehörige Verlauf des Verbrennungsgeräusches VS in diesem Zylinder eingezeichnet. Das Auftreten dieses Verbrennungsgeräusches wird zur Detektion von fehlerhaften bzw. fehlenden Verbrennungsvorgängen genutzt. Hierzu ist an dem Zylinderblock der Brennkraftmaschine an geeigneter Stelle ein Körperschallsensor befestigt, der die charakteristischen Klopfschwingungen in den Brennkammern der einzelnen Zylinder erfaßt. Der Sensor wandelt diese Schwingungen in elektrische Signale um, die zur weiteren Verarbeitung einer elektronischen Motorsteuerungseinrichtung zugeführt werden. Als Körperschallsensor kann dabei in vorteilhafter Weise ein Klopfsensor, d.h. ein nach dem piezoelektrischen Prinzip arbeitender Beschleunigungssensor eingesetzt werden.

Ein solcher Klopfsensor ist beispielsweise aus dem deutschen Gebrauchsmuster G 87 06 781.1 bekannt. Wird nur ein einziger Klopfsensor verwendet, so ist dessen Anbringungsort möglichst zentral am Motorgehäuse zu wählen. Um bei Brennkraftmaschinen mit 6, 8 oder 12 Zylindern die Genauigkeit der Auswertung der Klopfsignale der einzelnen Zylindern zu erhöhen, können 2 oder mehrere Klopfsensoren verwendet werden, die an entsprechenden Stellen des Motorgehäuses angeordnet sind, wobei eine bestimmte Zuordnung zwischen den Sensoren und den Zylindern festgelegt ist.

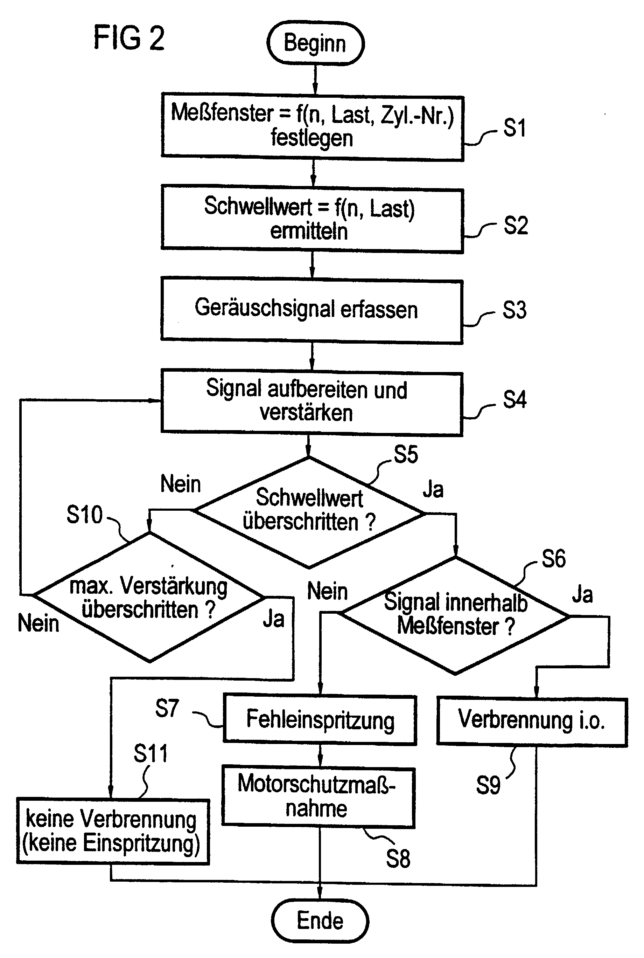

Anhand des Ablaufdiagramms nach Figur 2 wird das Verfahren erläutert, das für jeden Zylinder einzeln abläuft.

Das Verbrennungsgeräusch und das davon abgeleitete Klopfsignal wird zylinderindividuell innerhalb eines vorgebbaren Meßfensters MF, beispielsweise innerhalb des Bereiches von 45° Kurbelwinkel vor OT bis 15° Kurbelwinkel nach OT, gemessen und ausgewertet.

In einem ersten Verfahrensschritt S1 wird deshalb ein Meßfenster MF_{1...z} als Funktion der Drehzahl n, der Last der Brennkraftmaschine und der Zylindernummer z festgelegt. Wegen der Laufzeit des Verbrennungsgeräusches vom Entstehungsort in dem jeweiligen Zylinder bis zum Ort der Detektion durch den Sensor werden die Meßfenster in zylinderindividuellen Kennfeldern innerhalb eines Speichers der Motorsteuerungseinrichtung abgelegt.

Für jeden Zylinder Zyl_{1..z} wird drehzahl- und lastabhängig ein Schwellenwert SW_{1...z} festgelegt (Verfahrensschritt S2) und diese Werte werden ebenfalls in einem Speicher abgelegt. Im Verfahrensschritt S3 wird das Geräuschsignal des Körperschallsensors erfaßt, anschließend aufbereitet (gleichgerichtet) und mittels eines zylinderindividuellen Signalverstärkers verstärkt (Verfahrensschritt S4). Die Verstärkung kann dabei entweder in Stufen oder stufenlos verändert werden. Dies stellt sicher, daß unter allen Betriebsbedingungen der Brennkraftmaschine ein auswertbarer Signalverlauf innerhalb eines vorgegebenen Bereiches vorliegt.

Im Verfahrensschritt S5 wird das zylinderindividuelle Körperschallsignal mit dem jeweiligen zugeordneten Schwellenwert SW_{1...z} (Figur 1) verglichen. Wird der Schwellenwert überschritten, wird anschließend überprüft, ob das Signal des Sensors auch innerhalb des festgelegten Meßfensters MF_{1...z} liegt (Verfahrenschritt S6). Ist dies nicht der Fall, so wird im Verfahrensschritt S7 auf eine Fehleinspritzung geschlossen und es können Motorschutzmaßnahmen, wie beispielsweise eine Verringerung der Ansteuerzeit oder das Unterdrücken des Ansteuerimpulses für diesen Injektor eingeleitet werden (Verfahrensschritt S8).
Überschreitet das vom Klopfsensor erfaßte Signal KS_{1...z} den Schwellenwert SW_{1...z} innerhalb des Meßfensters MF_{1...z}, so wird in diesem Zylinder Zyl_{1...z} auf eine ordnungsgemäße Verbrennung geschlossen (Verfahrensschritt S9). Das auf diese Weise erhaltene Signal KS_{1...z} des Klopfsensors kann zur Bestimmung des Brennbeginns in dem jeweiligen Zylinder herangezogen und für weitere Steuermaßnahmen, zB. für eine Brennbeginnregelung benutzt werden.

Ergibt die Abfrage im Verfahrensschritt S5, daß das Signal KS_{1...z} des Sensors unterhalb des Schwellenwertes SW_{1...z} liegt, so wird im Verfahrensschritt S10 überprüft, ob die maximale Verstärkung des Sensorsignals bereits überschritten ist. Ist dies der Fall, so wird im Verfahrensschritt S11 auf eine fehlende Verbrennung und damit auf eine Nichteinspritzung geschlossen. Andernfalls werden die Verfahrensschritte S4, S5 und S10 solange wiederholt, bis entweder der Schwellenwert überschritten wird oder die Abfrage in Verfahrensschritt S10 ein positives Ergebnis liefert.

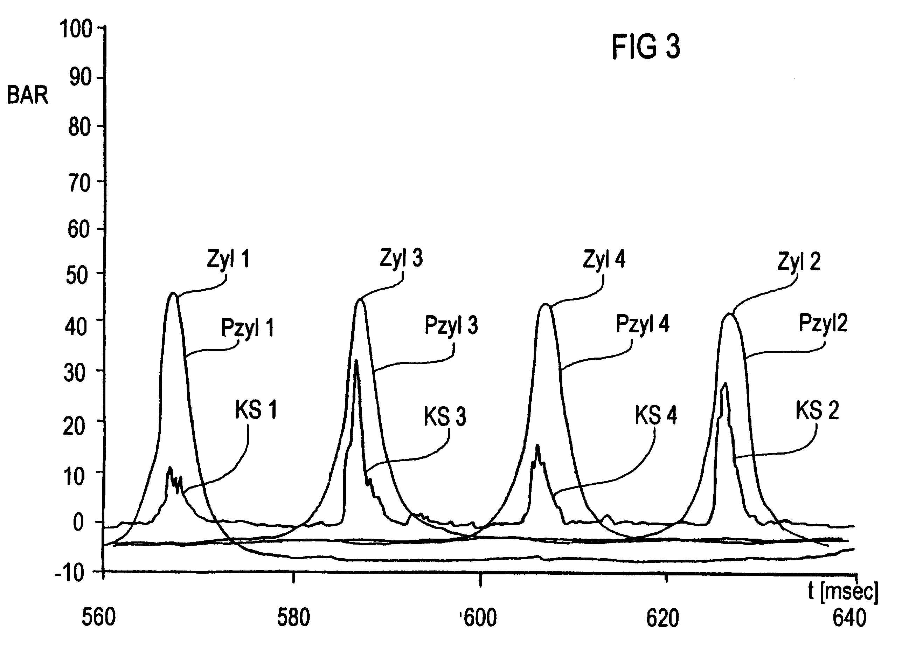

In Figur 3 ist ein durch Messungen an einer Brennkraftmaschine mit 4 Zylindern Zyl_{1...4} bei 1500 1/min erhaltenes Diagramm gezeigt. Entsprechend der Zündfolge 1-3-4-2 sind die Verläufe der Zylinderdrücke P_{Zyl1...4} und die zugehörigen Signale KS_{1...4} des Klopfsensors dargestellt.

## Patentansprüche

1. Verfahren zum Erkennen von irregulären Verbrennungsvorgängen in einer mehrzylindrigen Diesel-Brennkraftmaschine, wobei
- die Verbrennungsgeräusche zylinderindividuell mit Hilfe mindestens eines Körperschallsensors innerhalb von vorgebbaren Meßfenstern (MF_{1...z}) erfaßt werden,
- die zylinderindividuellen Körperschallsignale (KS_{1...z}) mit einzelnen, den Zylindern (Zyl_{1...z})zugeordneten Schwellenwerten (SW_{1...z}) verglichen werden,
- bei Überschreiten der Schwellenwerte (SW_{1...z}) überprüft wird, ob die Körperschallsignale (KS_{1...z}) die Schwellenwerte (SW_{1...z}) innerhalb oder außerhalb der Meßfenster (MF_{1...z}) überschreiten und
- auf Fehleinspritzungen von Injektoren der Einspritzeinrichtung geschlossen wird, wenn die Schwellenwerte (SW_{1...z}) außerhalb der Meßfenster (MF1...z) überschritten werden.

2. Verfahren nach Anspruch 1,
dadurch gekennzeichnet,
daß dann, wenn die Schwellenwerte (SW_{1...z}) innerhalb der Meßfenster (MF_{1...z}) überschritten werden, auf eine ordnungsgemäße Verbrennung geschlossen wird.

3. Verfahren nach Anspruch 1,
dadurch gekennzeichnet,
daß die Signale des Körperschallsensors (KS_{1...z}) vor der Weiterverarbeitung in einer Motorsteuerungseinrichtung gleichgerichtet und zylinderindividuell verstärkt werden, wobei der Verstärkungsfaktor in Stufen oder stufenlos veränderbar ist.

4. Verfahren nach Anspruch 3,
dadurch gekennzeichnet,
daß dann, wenn für die einzelnen Zylinder (Zyl_{1...z}) bei maximaler Verstärkung die Schwellenwerte (SW_{1...z}) innerhalb der Meßfenster (MF_{1...z}) nicht überschritten sind, auf Nichteinspritzungen geschlossen wird.

5. Verfahren nach Anspruch 1,
dadurch gekennzeichnet,
daß bei erkannten Fehleinspritzungen Motorschutzmaßnahmen, wie Verringerung der Ansteuerzeit oder das Unterdrücken von Ansteuerimpulsen für die Injektoren eingeleitet weren.

6. Verfahren nach Anspruch 1,
dadurch gekennzeichnet,
daß als Körperschallsensor ein nach dem piezoelektrischen Prinzip arbeitender Beschleunigungssensor eingesetzt wird.

7. Verfahren nach Anspruch 1,
dadurch gekennzeichnet,
daß die Meßfenster (MF_{1...z}) einen Bereich vor dem Oberen Totpunkt bis nach dem Oberen Totpunkt umfassen.

8. Verfahren nach Anspruch 1 oder 7,
dadurch gekennzeichnet,
daß die Meßfenster (MF_{1...z}) in zylinderindividuellen Kennfeldern eines Speichers einer elektronischen Motorsteuerungseinrichtung abgelegt sind.

9. Verfahren nach Anspruch 1,
dadurch gekennzeichnet,
daß mehrere Körperschallsensoren vorgesehen sind, wobei jeweils einem Sensor eine bestimmte Anzahl von Zylindern (Zyl_{1..z}) der Brennkraftmaschine zugeordnet sind.

## Claims

1. Method for detecting irregular combustion processes in a multicylinder diesel internal combustion engine,
- the combustion noises being recorded individually for each cylinder within predeterminable measurement windows (MW_{1...z}) by means of at least one structure-borne noise sensor,
- the structure-borne noise signals (KS_{1...z}) individual for each cylinder being compared with individual threshold values (TV_{1..z}) assigned to the cylinders (Cyl_{1...z}),
- if the threshold values (TV_{1...z}) are exceeded, a check being made as to whether the structure-borne noise signals (KS_{1...z}) exceed the threshold values (TV_{1...z}) within or outside the measurement windows (MW_{1...z}), and
- incorrect injections of injectors of the injection device being inferred when the threshold values (TV_{1...z}) outside the measurement windows (MW_{1...z}) are exceeded.

2. Method according to Claim 1, characterized in that correct combustion is inferred when the threshold values (TV_{1...z}) within the measurement windows (MW_{1...z}) are exceeded.

3. Method according to Claim 1, characterized in that the signals from the structure-borne noise sensor (KS_{1...z}), before being processed further in an engine control device, are rectified and amplified individually for each cylinder, the amplification factor being variable in steps or continuously.

4. Method according to Claim 3, characterized in that noninjections are inferred when the threshold values (TV_{1...z}) within the measurement windows (MW_{1...z}) are not exceeded for the individual cylinders (Cyl_{1...z}) in the case of maximum amplification.

5. Method according to Claim 1, characterized in that, when incorrect injections are detected, engine protection measures, such as reduction of the activation time or suppression of activating pulses for the injectors, are initiated.

6. Method according to Claim 1, characterized in that an acceleration sensor working on the piezoelectric principle is used as a structure-borne noise sensor.

7. Method according to Claim 1, characterized in that the measurement windows (MW_{1...z}) cover a range before top dead centre to after top dead centre.

8. Method according to Claim 1 or 7, characterized in that the measurement windows (MW_{1...z}) are filed in characteristic maps, individual to each cylinder, of a memory of an electronic engine control device.

9. Method according to Claim 1, characterized in that a plurality of structure-borne noise sensors are provided, a specific number of cylinders (Cyl_{1...z}) of the internal combustion engine being assigned in each case to a sensor.

## Revendications

1. Procédé de reconnaissance de phases de combustion irrégulières dans un moteur Diesel à cylindres multiples, consistant
- à relever les bruits de combustion individuellement pour chaque cylindre à l'aide d'au moins un capteur de bruit de structure, à l'intérieur de fenêtres de mesure (MF_{1...z}) pouvant être prescrites,
- à comparer les signaux de bruit de structure (KS_{1...z}) individuels de chaque cylindre à des valeurs de seuil (SW_{1...z}) individuelles, associées aux cylindres (Zyl_{1....z}),
- à vérifier, lors du dépassement des valeurs de seuil (SW_{1....z}), si les signaux de bruit de structure (KS_{1....z}) dépassent les valeurs de seuil (SW_{1....z}) à l'intérieur où à l'extérieur des fenêtres de mesure (MF_{1....z}), et
- à conclure à des injections défectueuses d'injecteurs du dispositif d'injection, lorsque les valeurs de seuil (SW_{1....z}) sont dépassées en-dehors des fenêtres de mesure (MF_{1....z}).

2. Procédé selon la revendication 1, **caractérisé** en ce que l'on conclut à une combustion correcte lorsque les valeurs de seuil (SW_{1....z}) sont dépassées à l'intérieur des fenêtres de mesure (MF_{1....z}).

3. Procédé selon la revendication 1, **caractérisé** en ce que les signaux (KS_{1....z}) du capteur de bruit de structure, avant la poursuite du traitement dans un dispositif de commande du moteur, sont redressés et amplifiés de manière individuelle par cylindre, le gain pouvant être modifié par paliers ou de façon continue.

4. Procédé selon la revendication 3, **caractérisé** en ce que lorsque pour les cylindres (Zyl_{1....z}) individuels, dans le cas d'une amplification maximale, les valeurs de seuil (SW_{1....z}) ne sont pas dépassées à l'intérieur des fenêtres de mesure (MF_{1....z}), on conclut à l'absence d'injections.

5. Procédé selon la revendication 1, **caractérisé** en ce qu'en cas d'identification d'injections défectueuses, on déclenche des mesures de protection du moteur, telles que la réduction du temps de commande ou la suppression d'impulsions de commande pour les injecteurs.

6. Procédé selon la revendication 1, **caractérisé** en ce que l'on met en oeuvre en guise de capteur de bruit de structure, un capteur d'accélération fonctionnant selon le principe piézo-électrique.

7. Procédé selon la revendication 1, **caractérisé** en ce que les fenêtres de mesure (MF_{1....z}) englobent une plage s'étendant d'avant le point mort haut à après le point mort haut.

8. Procédé selon la revendication 1 ou 7, **caractérisé** en ce que les fenêtres de mesure (MF_{1....z}) sont stockées dans des champs caractéristiques individuels pour chaque cylindre, d'une mémoire d'un dispositif de commande électronique du moteur.

9. Procédé selon la revendication 1, **caractérisé** en ce que sont prévus plusieurs capteurs de bruit de structure, à chaque capteur étant associé respectivement un nombre déterminé de cylindres (Zyl_{1....z}) du moteur à combustion interne.
